# EUROPEAN PATENT APPLICATION

(11) **EP 4 797 152 A1**
(43) Date of publication of application: **26.08.2026**
(21) Application number: 25159144.2
(22) Date of filing: 20.02.2025
(51) Int. Cl.: G06N 3/045, G06N 3/063, G06N 10/20, G06N 10/60, G06N 3/048, G06N 3/09, G06N 5/01

(54) **COMPUTER-IMPLEMENTED METHOD FOR APPROXIMATING AT LEAST TWO UNKNOWN VARIABLES OF A SET OF PARTIAL DIFFERENTIAL EQUATIONS, HYBRID COMPUTING SYSTEM, COMPUTER PROGRAM PRODUCT AND COMPUTER-READABLE MEDIUM**

(71) Applicant: Terra Quantum AG, 9000 St. Gallen (CH)
(72) Inventor: Sagingalieva, Asel, 9000 St. Gallen (CH); Melnikov, Alexey, 9000 St. Gallen (CH)
(74) Representative: Lucke, Andreas

(57) **Abstract**

The invention relates to a computer-implemented method for approximating at least two unknown variables (10) of a set of partial differential equations using a quantum physics-informed neural network (100), the method comprising the steps: providing a numerical grid (20) having grid coordinates (30) at which the unknown variables (10) are to be approximated; providing a quantum physics-informed neural network (100), the quantum physics-informed neural network (100) comprising a hybrid network (110) for each unknown variable (10), wherein the hybrid networks (110) are not interconnected to each other, each hybrid network (110) having a quantum network (120) having at least one quantum layer (130) and a classical network (140) having at least one classical layer (150), wherein the respective quantum network (120) and the respective classical network (140) are not interconnected; inputting the grid coordinates (30) into the quantum physics-informed neural network (100), such that the grid coordinates (30) are input to each hybrid network (110); and computing the output (Hₒᵤₜ) of each hybrid network (110) for each grid coordinate (30), each output (Hₒᵤₜ) corresponding to a different unknown variable (10) to be approximated at the grid coordinate (30), wherein the output (Hₒᵤₜ) of each hybrid network (110) is obtained by combining an output of the respective quantum network (Qₒᵤₜ) and an output of the respective classical network (Cₒᵤₜ) of said hybrid network (110). The invention further relates to a hybrid computing system, a computer program product and a computer-readable medium.

## Description

### FIELD OF THE DISCLOSURE

The present disclosure relates to a hybrid computing system and methods for approximating at least two unknown variables of a set of partial differential equations using quantum physics-informed neural networks.

### BACKGROUND OF THE INVENTION

In the field of computational mathematics, solving partial differential equations (PDEs) is a fundamental task with applications spanning various scientific and engineering disciplines. Traditional numerical methods, such as finite element methods, finite difference methods, and spectral methods, have been extensively used to approximate solutions to PDEs. These methods typically involve discretizing the domain into a numerical grid and solving the resulting system of algebraic equations. While these approaches have been successful, they often require significant computational resources, especially for high-dimensional problems or when high accuracy is needed.

In recent years, machine learning techniques, particularly neural networks, have been explored as alternative methods for solving PDEs. Physics-informed neural networks (PINNs) have gained attention for their ability to incorporate physical laws directly into the learning process. PINNs leverage the power of neural networks to approximate solutions to PDEs by minimizing a loss function that includes the residuals of the PDEs and boundary conditions. Despite their promise, PINNs face challenges such as difficulty in handling complex boundary conditions, and limitations in capturing the intricate details of the solution space.

Quantum neural networks (QNNs) are a novel approach that combines the principles of quantum computing with neural networks. QNNs have shown potential in various applications, including optimization and machine learning.

Despite the substantial advances in the field of solving PDEs using classical and quantum neural networks, there remains a need for improved methods that can efficiently and accurately approximate solutions to PDEs, particularly in high-dimensional spaces and under complex boundary conditions.

### SUMMARY OF THE DISCLOSURE

It is therefore an object underlying the present invention to provide a computer-implemented method for approximating unknown variables of PDEs, a hybrid computing system, a computer program product and a computer-readable medium that at least partially overcome the disadvantages of known systems. The invention is defined by the appended claims.

An aspect of the disclosure relates to a computer-implemented method for approximating at least two unknown variables of a set of partial differential equations using a quantum physics-informed neural network, the method comprising the steps:
providing a numerical grid having grid coordinates at which the unknown variables are to be approximated;
providing a quantum physics-informed neural network, the quantum physics-informed neural network comprising a hybrid network for each unknown variable, wherein the hybrid networks are not interconnected to each other, each hybrid network having a quantum network having at least one quantum layer and a classical network having at least one classical layer, wherein the respective quantum network and the respective classical network are not interconnected;
inputting the grid coordinates into the quantum physics-informed neural network, such that the grid coordinates are input to each hybrid network; and
computing the output of each hybrid network for each grid coordinate, each output corresponding to a different unknown variable to be approximated at the grid coordinate, wherein the output of each hybrid network is obtained by combining an output of the respective quantum network and an output of the respective classical network of said hybrid network.

A "not interconnected" quantum network and classical network may mean that the classical network computes its output independently of the quantum network, and vice versa. "Not interconnected" may mean or comprise that intermediate outputs of one of the networks, such as those of some layer of the classical network and/or quantum network, are not used and/or inputted into another network. For instance, it may be provided that an output of a hidden layer of the classical network may not be used as input for any other classical network and/or hybrid network.

However, even if two networks are not interconnected, their final output, such as e.g. the output of a last layer of a network, may be combined. In particular, the output of a hybrid network is given by combining the output of at least one classical network and at least one quantum network which are not interconnected.

Similarly, different hybrid networks may not be interconnected. Thus, the output of one hybrid network may be independent of all other hybrid networks. The output of a hybrid network may depend only on the inputs as well as the particular hybrid network, in particular its parameters and weights.

The output of a hybrid network for a given grid point may correspond to an approximation of a respective unknown variable at said grid point. The outputs of the hybrid networks may be or may correspond to output of the quantum physics-informed neural network.

Surprisingly, it was found that the quality and accuracy of the output of the not interconnected hybrid networks (and the quantum physics-informed neural network) is quite accurate, and not worse when compared to fully connected networks.

Thus, it is a technical effect that because of the hybrid networks not being interconnected, and/or because of the respective classical network and quantum network of a hybrid network not being interconnected, the method according to the disclosure is highly scalable. Further, network traffic of the computer hardware such as e.g. distributed servers, but also between individual CPUs and GPUs, may be reduced. Similarly, communication between computing units, CPUs and/or GPUs may be reduced. Further, the method allows for an efficient segmentation of the data and/or the respective instructions in the memory (e.g. RAM) and/or cash of the used computing hardware. Thus, such a distribution of computation tasks allows more efficient processing and utilization of resources.

Additionally, because the hybrid networks are not interconnected (and similarly because the respective classical networks and quantum networks of a hybrid network are not interconnected), less memory (e.g. RAM) is required, since less connections, weights and parameters are required. Additionally, the training time is reduced. Thus, the hardware requirements for training (and for running) the hybrid networks, and consequently the quantum physics-informed neural network, are reduced. In particular, it is possible to do so on less powerful hardware, which may have enough memory to fit the not interconnected networks, but not a fully connected networks with the same number of layers. Further, the time for training and running the quantum physics-informed neural network is reduced.

Another technical effect achieved is that the method allows for an approximation of only some of the unknown variables. In particular, when approximating one of the unknown variables, running only the respective hybrid network which yields the respective variable as output, but not all the other hybrid networks, may be required. This may be particularly advantageous for double-checking errors, or when some variable or quantity is approximated well enough, but some other is not. In this case, the quantity which has good accuracy and/or small enough errors need not be calculated again. Thereby, a technical effect of avoiding redundant and/or unnecessary computations is achieved.

Further, the method may be highly accurate, because of the combination of a quantum network and a classical network having the same input. Additionally, the precision of the solutions may be increased, and/or errors reduced. Because the networks are not interconnected, there is less error-propagation when computing outputs and/or a reduced accumulation of errors. The method may also allow faster computations compared to traditional methods.

Moreover, the separation of quantum and classical networks within each hybrid network ensures that the unique advantages of quantum computing, such as handling complex computations and large datasets, are utilized without interference from the classical network. Conversely, the classical network can handle tasks that are more suited to traditional computing methods. By not interconnecting the hybrid networks for each unknown variable, the method maintains the independence of each variable's approximation process, e.g. reducing potential computational complexity and enhancing the precision of the results.

The method thus introduces a novel approach by leveraging the strengths of both quantum and classical computing within a neural network framework, allowing for more accurate and efficient approximation of unknown variables in partial differential equations, as well as many other technical effects and advantages.

The set of partial differential equations may comprise at least two coupled differential equations. The set of partial differential equations may comprise more than two differential equations, each differential equation being coupled to at least one other, or all other, partial differential equations. The unknown variables may be variables described or solved for by the partial differential equations. For instance, the set of partial differential equations may comprise the Navier-Stokes equations for incompressible flow, and the continuity equation, such that the unknown variables may be the velocity (more particularly, the components of the velocity vector) and the pressure the flow.

The set of partial differential equations is not limited to the incompressible Navier-Stokes equations and the continuity equation. The set of partial differential equations may comprise additional or other partial differential equations. Only some examples are diffusion, heat conduction, fluid flow, compressible flow, deformation or displacement, chemical kinetics, oscillations, waves, electrodynamics, electromagnetism and the like, without being limited thereto.

The numerical grid may comprise grid coordinates in at least two dimensions. At least one coordinate may be a spatial coordinate or may correspond to a spatial direction, such as e.g. an axis or a curve in space. One of the coordinates and/or dimensions may be time. For instance, the numerical grid may comprise grid points having coordinates in a two-dimensional plane or on a two-dimensional surface. Alternatively, the numerical grid may comprise grid points in a space having dimension of at least three. In another non-limiting example, the numerical grid may have a one-dimensional axis in some spatial direction, e.g. an x-axis as one of the dimensions, and time as one or the other dimension.

A grid point of the numerical grid may be defined by a tuple containing the respective coordinates. For instance, a grid point may be defined by a tuple (x, y) or (x, y, z), where x, y and z are spatial coordinates. For instance, a grid point may be defined by a tuple (s, t), where s is a curvilinear or longitudinal axis and t is time. For instance, a grid point may be defined by a tuple (x, y, t) or (x, y, z, t). The numerical grid is not limited to these examples. The number of dimensions may result from the set of partial differential equations to be approximated.

The method thus introduces a novel approach by leveraging the strengths of both quantum and classical computing within a neural network framework, allowing for more accurate and efficient approximation of unknown variables in partial differential equations. The separation of quantum and classical networks within each hybrid network ensures that the unique advantages of quantum computing, such as handling complex computations and large datasets, are utilized without interference from the classical network. Conversely, the classical network can handle tasks that are more suited to traditional computing methods. By not interconnecting the hybrid networks for each unknown variable, the method maintains the independence of each variable's approximation process, reducing potential computational complexity and enhancing the precision of the results.

According to an embodiment, the computer-implemented method may further comprise training the quantum physics-informed neural network before providing the quantum physics-informed neural network. The training may comprise a loss function formed from the partial differential equations to be solved and from boundary conditions.

The "loss function" may be a measure of how well the model's predictions match the actual data. The loss function may include two components: the partial differential equations loss function and the boundary condition loss function. The partial differential equations loss function ensures that the neural network's predictions satisfy the underlying physical equations, i.e. the partial differential equations to be approximated (e.g. the Navier-Stokes equations), while the boundary condition loss function ensures that the predictions adhere to the specified boundary conditions.

This approach ensures that the neural network is not merely a generic model but is finely tuned to the specific requirements and/or a specific problem. This results in a more robust and reliable model that can provide accurate predictions and solutions in practical scenarios. Furthermore, this training methodology allows for the incorporation of domain-specific knowledge into the neural network.

Training may comprise adjusting weights and/or parameters of the quantum physics-informed neural network, in particular of the hybrid networks (and the respective quantum networks and classical networks). The weights and/or parameters and/or parameters may be adjusted such that the loss function is minimized.

In some embodiments, it may be provided that the training may comprise a transfer learning. In particular, when the partial differential equations are the same, but the boundary conditions differ not too much, transfer learning may reduce the time required for training. For instance, transfer learning may start from a previously trained model.

According to an embodiment, the boundary conditions may comprise at least one periodic boundary condition.

A "periodic boundary condition" may be a type of boundary condition where the function values repeat periodically. For instance, if the boundary conditions at two opposing edges of the numerical grid may be periodic. A periodic boundary condition may be a specific type of boundary condition where the boundaries are continuous and repeat in a periodic manner. For instance, the values at one boundary of the numerical grid may be matched with the values at the opposite boundary, creating a seamless transition that mimics an infinite or cyclic domain. This may allow for the simulation of phenomena that are inherently periodic in nature, such as wave propagation, crystal lattice structures, and other cyclic processes. By implementing periodic boundary conditions, the method can more accurately represent the physical reality of such systems, leading to more precise and reliable results. Secondly, periodic boundary conditions can significantly reduce the computational resources required for the simulation. When the boundaries are periodic, the model can use a smaller computational domain to represent a larger system, thereby reducing the number of calculations and the amount of memory needed.

The quantum network of a hybrid network can be highly suitable for periodic boundary conditions. In particular, the quantum network may proximate periodic functions better than a classical network. In some sense, the quantum network may be considered an analog of the "natural" Fourier transform. For example, the quantum network may be responsible for approximating a periodic part of the solution. The classical network may capture e.g. attenuation and linear shift.

In particular, one advantage of the method is its ability to utilize the expressiveness of quantum neural networks, which can naturally approximate periodic functions and offer enhanced accuracy in predicting solutions with fewer iterations compared to classical models. By integrating quantum computing, the method can potentially overcome the limitations of classical machine learning models, such as high computational resource requirements. This approach may be particularly beneficial in fields that require precise modeling of e.g. fluid flows, such as aerodynamics, mixing, chemical reactors, weather prediction, and engine design.

According to an embodiment, combining the output of the quantum network (Qout) and the output of the classical network (Cout) to obtain the output of a respective hybrid network (Hout) comprises a weighted sum ${H}_{out} = {w}_{0} + {w}_{1} ∗ {Q}_{out} + {w}_{2} {C}_{out} + {w}_{3} {Q}_{out} {C}_{out}$ where w₀, w₁, w₂ and w₃ are weights.

The output of the hybrid network may correspond to the approximation of an unknown variable at the grid points.

The weights can be tuned and/or adjusted during or when training. The weights can be tuned and/or adjusted to optimize performance for various tasks or datasets. The weighted sum may not only combine the outputs linearly, but may also include a term that multiplies the quantum and classical outputs together. This interaction term allows for capturing potential synergistic effects between the quantum and classical components, which might be crucial for certain applications where the combined effect of both networks is greater than the sum of their individual contributions. This method of combining outputs is particularly advantageous in scenarios where the strengths of quantum computing, such as e.g. handling periodic boundary conditions, complex probabilistic computations, or the like, can complement the deterministic and well-established capabilities of classical computing. By leveraging the unique advantages of both quantum and classical networks, the hybrid network can offer improved computational efficiency, accuracy, or problem-solving capabilities.

According to an embodiment, inputting the grid coordinates comprises inputting the same grid coordinates into each classical network and each quantum network.

By inputting the same grid coordinates into each classical network and each quantum network, the method enhances the interoperability between these distinct types of networks. Further, thereby the respective outputs are calculated for the same grid points, such that their combination may independently capture different effects at the same position in the numerical grid. Thus when combining the individual outputs of a classical network and a quantum network, the combined output may result in a good approximation of the respective unknown variable. Further, a direct comparison of the output of the classical network and the quantum network is possible, as their outputs correspond to the same position in the physical grid.

According to an embodiment, the output of each classical network may be computed by a classical computing unit, and the output of each quantum network may be computed by a quantum computing unit.

A classical computation unit may be or may comprise a processor, e.g. a CPUs or a GPU, which executes algorithms and perform calculations using binary data. A quantum computing unit may leverage the principles of quantum mechanics, utilizing qubits that can exist in multiple states simultaneously. Thereby, a quantum computing unit may be able to perform complex computations more efficiently for certain types of problems. The classical computing unit may handle tasks that are well-suited to classical algorithms, ensuring efficient and reliable performance for these operations. Meanwhile, the quantum computing unit may tackle problems that benefit from quantum parallelism and entanglement. By delineating the computational responsibilities between classical and quantum computing units, this method enhances the overall computational efficiency and capability of the system. This hybrid approach not only optimizes resource utilization but also allows for the integration of quantum computing advancements into existing classical computing frameworks.

In some embodiments, the quantum computing unit may be simulated on a classical computer. However, the disclosure is not limited thereto, and all suitable quantum computing units may be considered. In particular, the quantum computing unit may not be simulated, but a "real" quantum computing unit.

According to an embodiment, the output of the quantum network may be transmitted from the quantum computing unit to the classical computing unit, and the classical computing unit may combine the output received from the quantum computing unit with the output (computed by said classical computing unit to the output of the hybrid network. In particular, the classical computing unit may combine the output of the quantum computing unit with its own computed output to generate the output of a respective hybrid network.

Alternatively or additionally, it may be provided that the output of the quantum network is transmitted from the quantum computing unit to an output unit, and the output of the classical network may be transmitted from the classical computing unit to the output unit. The output unit may combine the output received from the classical computing unit and the output received from the quantum computing unit to the output of the hybrid network. In particular, the output unit may be responsible for combining the outputs received from both the quantum computing unit and the classical computing unit to produce the final output of the hybrid network.

In some embodiments, there may be multiple classical computing units and/ or multiple quantum computing units provided, but only a single output unit. The output unit may then combine the outputs of the multiple classical computing units and/ or multiple quantum computing units. The output unit may in particular combine the outputs of respective pairs of classical computing units and quantum computing units.

According to an embodiment, each quantum layer may be or may comprise a parameterized quantum two-qubit layer. The parameters of the quantum two-qubit layer may be adjusted during and/or when training. The introduction of parameterized quantum two-qubit layers enhances the system's ability to perform complex quantum algorithms more efficiently.

According to an embodiment, each classical network may be or may comprise a multilayer perceptron. A multilayer perceptron may be a type of artificial neural network that comprises multiple layers of nodes, with each layer connected to the next one. This architecture allows for complex representations and the ability to model intricate patterns in data. The classical network comprises multiple activation functions, weights and/or parameters. The weights and/or parameters may be adjusted during and/or when training. The classical network may have an input layer which receives the input (i.e. the grid points), which may then be processed through one or more hidden layers. Each hidden layer may comprise neurons that apply a weighted sum followed by a non-linear activation function to the inputs received from the previous layer. This process may enable the classical network to learn and represent non-linear relationships in the data. An output layer then produces the final predictions based on the processed information from the hidden layers. The output of the output layer is the output of the classical network, which may then be combined with the output of a quantum network. Additionally, the use of multilayer perceptrons facilitates the learning of hierarchical representations, where higher layers capture more abstract features of the data. This hierarchical learning is particularly beneficial in tasks that require the extraction of intricate patterns and relationships. Furthermore, the flexibility of multilayer perceptrons allows for the customization of network architecture, such as the number of layers and neurons per layer, to suit specific applications and data characteristics. This adaptability enhances the method's versatility and applicability across different domains.

According to an embodiment, at least one activation function may be a Sigmoid Linear Unit (SiLU) activation function, also known as the Swish activation function. A SiLU may combine the properties of both the sigmoid and linear functions. This activation function introduces a smooth, non-linear transformation that allows for better gradient flow during backpropagation, thereby enhancing the learning capabilities of the classical network. The incorporation of the SiLU activation function into the classical network provides several advantages. Firstly, it mitigates the vanishing gradient problem commonly encountered with traditional sigmoid or tanh activation functions, which can hinder the training of the classical networks. Secondly, the SiLU activation function has been shown to improve the performance of neural networks on various tasks by enabling more efficient learning and better convergence properties. This is due to its ability to retain the input information for small values while providing non-linearity, which is crucial for capturing complex patterns in the data. Furthermore, the smooth nature of the SiLU activation function ensures that the gradients are not abruptly zeroed out, as can happen with Rectified Linear Unit (ReLU) activation functions, thereby maintaining a steady gradient flow. This characteristic is particularly beneficial for deep networks, where maintaining gradient flow is essential for effective training. Additionally, the SiLU activation function's inherent ability to balance linearity and non-linearity allows the network to model intricate relationships within the data more effectively.

Another aspect of the disclosure relates to a hybrid computing system being configured to carry out the method according to an aspect of the disclosure.

The hybrid computing system may be used to carry out the method according to the disclosure. The hybrid computing system may have at least one features and/or advantages of a method according to an aspect of the disclosure.

The term "computing system" may refer to a hardware and software setup capable of performing complex computations. This may include, but is not limited to, processors, memory units, storage devices, and specialized software designed to execute algorithms and models.

The hybrid computing system may have at least one, or all, technical effects and advantages as disclosed and/or described for the method according to the disclosure. The hybrid computing system may have at least one of the features as disclosed and/or described for the method according to the disclosure.

According to an embodiment, the hybrid computing system may comprise a classical computing unit which is configured to compute the output of at least one or all classical networks. The hybrid computing system may further comprise a quantum computing unit which is configured to compute the output of at least one or all quantum networks.

The classical computing unit may refer to traditional computer systems that use classical bits for processing information, whereas the quantum computing unit may utilize quantum bits (qubits) to perform computations based on the principles of quantum mechanics.

One advantage of this hybrid system lies in its ability to utilize quantum neural networks, which can e.g. naturally approximate periodic functions or offer enhanced accuracy in predicting solutions with fewer iterations compared to classical models. By integrating quantum computing, the system can potentially overcome the limitations of classical machine learning models, such as high computational resource requirements, thereby improving the efficiency and accuracy.

The integration of a classical computing unit and a quantum computing unit within the hybrid system may allow for a system where each unit can process tasks that align with its strengths. For instance, the classical computing unit can efficiently manage tasks that require precise and linear processing, while the quantum computing unit may tackle complex problems that benefit from quantum parallelism and probabilistic processing.

According to an embodiment, the quantum computing unit and the classical computing unit are connected such that data may be transmitted between them, wherein the quantum computing unit is configured to transmit the output of the quantum network to the classical computing unit and wherein the classical computing unit is configured to combine output received from the quantum computing unit with output computed by the classical computing unit to an output of the hybrid network.

Alternatively or additionally, the hybrid computing system comprises an output unit which is connected to the classical computing unit and the quantum computing unit such that data may be transmitted between the output unit and the classical computing unit and between the output unit and the quantum computing unit, wherein the classical computing unit is configured to transmit output to the output unit and wherein the quantum computing unit is configured to transmit output to the output unit, wherein the output unit is configured to combine the respective outputs to an output of the hybrid network.

Another aspect of the disclosure relates to a computer program product comprising instructions which, when the program is executed by a hybrid computing system according to an aspect of the disclosure, to cause the hybrid computing system to carry out a method according to an aspect of the disclosure.

Another aspect of the disclosure relates to a computer-readable medium comprising instructions which, when executed on a hybrid computing system according to the disclosure, cause the hybrid computing system to carry out a method according to the disclosure.

A computer-readable medium may refer to any type of data storage device that can store digital information. The computer-readable medium may comprise sequences of coded commands that a computer can interpret and execute. A computer-readable medium can include physical media such as CDs, DVDs, USB drives, or digital downloads.

The disclosure is further detailed with reference to the following figures:
- Fig. 1:: an exemplary method for approximating at least two unknown variables of a set of partial differential equations using a quantum physics-informed neural network according to the disclosure;
- Fig. 2:: an exemplary embodiment of a quantum physics-informed neural network with hybrid networks for approximating unknown variables according to the disclosure;
- Fig. 3:: an exemplary embodiment of a hybrid network comprising a quantum network and a classical network according to the disclosure;
- Fig. 4:: an exemplary embodiment of a quantum network according to the disclosure;
- Fig. 5:: exemplary embodiments of numerical grids; and
- Fig. 6:: exemplary embodiments of hybrid computing systems according to the disclosure.

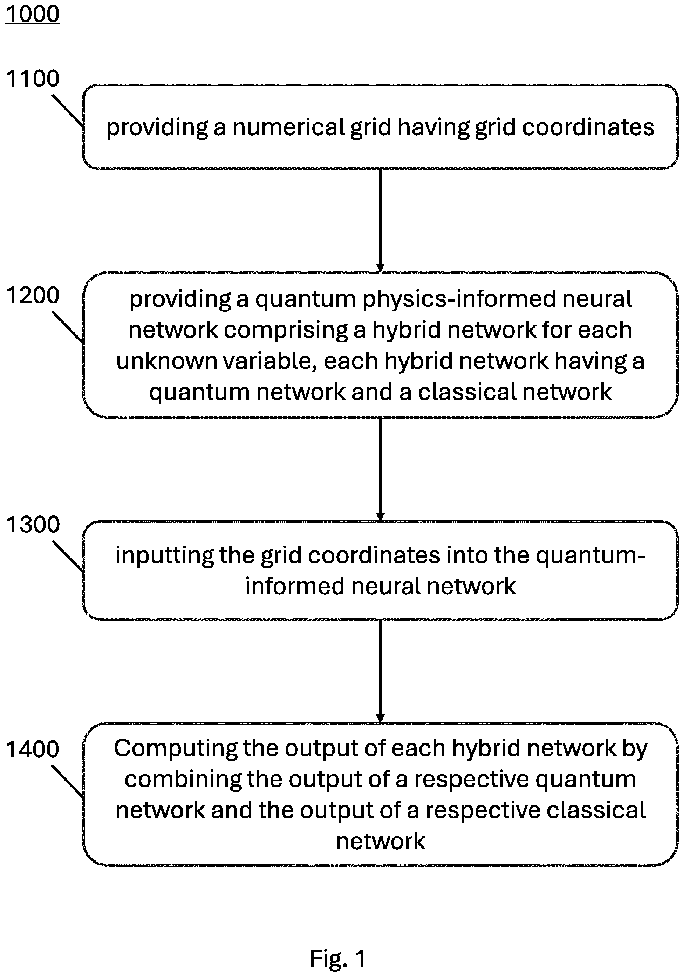

Figure 1 illustrates a flowchart 1000 of a computer-implemented method according to an aspect of the disclosure.

The computer-implemented method may approximate the solution of at least two unknown variables of a set of partial differential equations, which can be written as $D \left[f\left(r, t\right);λ\right] = 0 ,$

Here, *f* is an unknown variable at spatial coordinates ***r*** and time *t*, and *λ* are one or more parameters of the partial differential equations. A non-limiting example a set of coupled partial differential equations ist given by the Navier-Stokes equations $\frac{\partial v}{\partial t} = - \left(v⋅∇\right) v + ν Δ v - \frac{1}{ρ} ∇ p + f ,$ where v is the velocity vector, p the pressure, ρ the density, v the kinematic viscosity and **f** external forces.

For example, the following two equations are two coupled partial differential equations where vx, vy and p are unknown variables, which correspond to the Kovasznay flow model (where the unsteady terms have not been written down or are neglected), which correspond to the above Navier-Stokes equations under further assumptions (cf. Laminar flow behind a two-dimensional grid, L. Kovasznay, Mathematical Proceedings of the Cambridge Philosophical Society, 1948), $\begin{matrix}{v}_{x} \frac{\partial {v}_{x}}{\partial x} + {v}_{y} \frac{\partial {v}_{x}}{\partial y} = - \frac{\partial p}{\partial x} + \frac{1}{Re} \left(\frac{{\partial }^{2} {v}_{x}}{\partial {x}^{2}}+\frac{{\partial }^{2} {v}_{x}}{\partial {y}^{2}}\right) , \\ {v}_{x} \frac{\partial {v}_{y}}{\partial x} + {v}_{y} \frac{\partial {v}_{y}}{\partial y} = - \frac{\partial p}{\partial y} + \frac{1}{Re} \left(\frac{{\partial }^{2} {v}_{y}}{\partial {x}^{2}}+\frac{{\partial }^{2} {v}_{y}}{\partial {y}^{2}}\right) ,\end{matrix}$

The third equation required for solving is provided by the continuity equation, which is not listed here. These equations are equations for two-dimensional flow, where vₓ and v_{y} are the components of the (two-dimensional) velocity vector and p is the pressure. The Reynolds number Re is a parameter of the partial differential equations. Eq. (2) may comprise an additional terms for the time change of velocity, i.e. terms containing the respective first derivative of the velocity with respect to time. Note that the two equations are not exactly in the form of equation (1), as the r.h.s is not zero.

In a first step 1100 a numerical grid having grid coordinates is provided. The grid coordinates correspond to those points (in space and/or time), where the solution is to be approximated. The grid coordinates may be or comprise input to a quantum physics-informed neural network. At least one grid coordinate may be or may comprise a spatial coordinate, such as e.g. a direction in a space. At least one grid coordinate may be or may comprise time. In some embodiments, the grid coordinates are regularly. However, the invention is not limited thereto.

In a second step 1200 a quantum physics-informed neural network is provided. This neural network comprises a hybrid network for each unknown variable, where each hybrid network includes both a quantum network and a classical network. The quantum network and the classical network within each hybrid network are not interconnected. The quantum network and the classical network of the same hybrid network have the same input. The input of a hybrid network may be or may correspond to the input to a classical network and/or a quantum network of the respective hybrid network. The quantum network may compute an output based on its input. The classical network may compute an output based on its input. The output of the classical network and the output of the quantum network may be combined to an output of the respective hybrid network.

The respective hybrid networks are not interconnected. Thereby, a number of technical effects and advantages are achieved.

For instance, a technical effect that because of the hybrid networks not being interconnected, and/or because of the respective classical network and quantum network of a hybrid network are not interconnected, the method is highly scalable. Further, network traffic of the computer hardware such as e.g. distributed servers, but also between individual CPUs and GPUs, may be reduced. Similarly, communication between computing units, CPUs and/or GPUs may be reduced. Further, the method allows for an efficient segmentation of the data and/or the respective instructions in the memory (e.g. RAM) and/or cash of the used computing hardware. Thus, such a distribution of computation tasks allows more efficient processing and utilization of resources.

Additionally, because the hybrid networks are not interconnected (and similarly because the respective classical networks and quantum networks of a hybrid network are not interconnected), less memory (e.g. RAM) is required, since less connections, weights and parameters are required. Additionally, the training time is reduced. Thus, the hardware requirements for training (and for running) the hybrid networks, and consequently the quantum physics-informed neural network, are reduced. In particular, it is possible to do so on less powerful hardware, which may have enough memory to fit the not interconnected networks, but not a fully connected networks with the same number of layers. Further, the time for training and running the quantum physics-informed neural network is reduced.

Another technical effect achieved is that the method allows for an approximation of only some of the unknown variables. In particular, when approximating one of the unknown variables, running only the respective hybrid network which yields the respective variable as output, but not all the other hybrid networks, may be required. This may be particularly advantageous for double-checking errors, or when some variable or quantity is approximated well enough, but some other is not. In this case, the quantity which has good accuracy and/or small enough errors need not be calculated again. Thereby, a technical effect of avoiding redundant and/or unnecessary computations is achieved.

Further, the method may be highly accurate, because of the combination of a quantum network and a classical network having the same input. Additionally, the precision of the solutions may be increased, and/or errors reduced. Because the networks are not interconnected, there is less error-propagation when computing outputs and/or a reduced accumulation of errors. The method may also allow faster computations compared to traditional methods.

Moreover, the separation of quantum and classical networks within each hybrid network ensures that the unique advantages of quantum computing, such as handling complex computations and large datasets, are utilized without interference from the classical network. Conversely, the classical network can handle tasks that are more suited to traditional computing methods. By not interconnecting the hybrid networks for each unknown variable, the method maintains the independence of each variable's approximation process, e.g. reducing potential computational complexity and enhancing the precision of the results.

In a third step 1300, the grid coordinates are input into the quantum physics-informed neural network. The grid coordinates may be fed into each hybrid network, and may subsequently be further fed into each classical and quantum network of each hybrid network.

In a fourth step 1400, involves output of each hybrid network is computed by combining the output of the respective quantum network and the output of the respective classical network. This combination of outputs results in the approximation of the respective unknown variable at the given grid coordinates.

For instance, the quantum network and/or the quantum part may be responsible for approximating a periodic part of the solution, while the classical network and/or classical part may contain an attenuation and/or a linear shift.

In some embodiments, combining the output of a quantum network and the output of the respective classical network comprises a weighted sum ${H}_{out} = {w}_{0} + {w}_{1} ∗ {Q}_{out} + {w}_{2} {C}_{out} + {w}_{3} {Q}_{out} {C}_{out}$ where w₀, w₁, w₂ and w₃ are weights. The output of the hybrid network may comprise a term that is constant and/or independent of the output of a classical network and of a quantum network of the hybrid network. The output of the hybrid network may comprise a term that is proportional to and/or scales linearly with the output of a quantum network of the hybrid network. The output of the hybrid network may comprise a term that is proportional to and/or scales linearly with the output of a classical network of the hybrid network. The output of the hybrid network may comprise a term that is proportional to the product of a classical network and a quantum network of the hybrid network.

In a specific embodiment, a hybrid network comprises exactly one classical network and exactly one quantum network. However, the hybrid network is not limited thereto, and the weighted sum may be chosen accordingly. For instance, it may be provided that the weighted sum comprises constant term. The weighted sum may comprise a linear term for each output of the classical network. The weighted sum may comprise a linear term for each output of the quantum network of the hybrid network. The weighted sum may comprise a term that is proportional to the product of a classical network and a quantum network for each pair of classical network and quantum network. In some embodiments, the weighted sum may comprise a term that is proportional to the product of at least one of classical network and quantum network, with more than one of another classical network and/or quantum network.

The weights of the weighted sum may be parameters of the hybrid network. The weights of the weighted sum may be adjusted and/or learned during or when training the hybrid network and/or the quantum physics-informed neural network.

In some embodiments, it may be provided that the quantum physics-informed neural network 100 is trained before being provided. The training may be carried out using a loss function $L = {L}_{PDE} + {L}_{BC} ,$ that comprises a loss function of the partial differential equations, L_{PDE}, and a loss function of the boundary conditions L_{BC}. The boundary conditions may be e.g. Dirichlet boundary conditions or von Neumann boundary conditions, but are not necessarily limited thereto.

In some embodiments, the loss function of the of the partial differential equations may be given by ${L}_{PDE} = {\left〈{\left(D\left[u\left(r, t\right);λ\right]\right)}^{2}\right〉}_{Ω} ,$ where u(r, t) is the output of the quantum physics-informed neural network 100 of an unknown variable with r as spatial coordinates and time t. Thus, the more accurately the output of the quantum physics-informed neural network 100 approximates the solution of the partial differential equations, the smaller the loss function. Here, the loss function is equivalent to the MSE (mean square error), but not necessarily limited thereto.

The name "physics-informed" may refer to the fact that physical laws (differential equations describing a particular problem) are employed in the loss function. When trained, such models minimize the error of the respective differential equations.

In some embodiments, the loss function of the boundary conditions may be given by ${L}_{BC} = {\left〈{\left(u\left(r, t\right)-{u}_{0}\left(r, t\right)\right)}^{2}\right〉}_{B} ,$ where again u(***r***, t) is the output of the quantum physics-informed neural network 100 for an unknown variable, u₀(***r***, t) the value of the unknown variable at the boundary, *r* the spatial coordinates and t time. Thus, the more accurately the output of the quantum physics-informed neural network 100 approximates the boundary conditions, the smaller the loss function. Here, the loss function is equivalent to the MSE (mean square error), but not necessarily limited thereto.

The quantum physics-informed neural network 100, and/or the hybrid networks 110, may be trained using a loss function. In some embodiments, training data may be provided by numerically solving the partial differential equations. When training, in some embodiments transfer learning may be employed, such as e.g. by using an already trained network. In some embodiments, transfer learning may be employed when only the boundary conditions are changed, e.g. the numerical values of u₀(***r***, t), but the partial differential equations remain the same.

In some other embodiments, an analytical solution of the partial differential equations may be known which may serve for generating training data. In some other embodiments, the partial differential equations themselves may be used for training and/or minimizing the loss function at some given points.

In some embodiments, the individual loss functions of each hybrid network 110 (i.e. for each unknown variable) may be added together to form with further the loss function of the boundary conditions a global loss function. For example, when there are three unknown variables vₓ, and p, the loss function may be $L = {L}_{{v}_{x}} + {L}_{{v}_{y}} + {L}_{p} ,$ where the loss function L_{BC} may then further be added. Alternatively, in some embodiments it may be provided to train the hybrid networks individually, which may be possible due to them not being interconnected.

The quantum network may be trained using the Adam algorithm as optimizer for minimizing the loss function. In some embodiments, the classical network may be trained using the Adam algorithm as optimizer for minimizing the loss function.

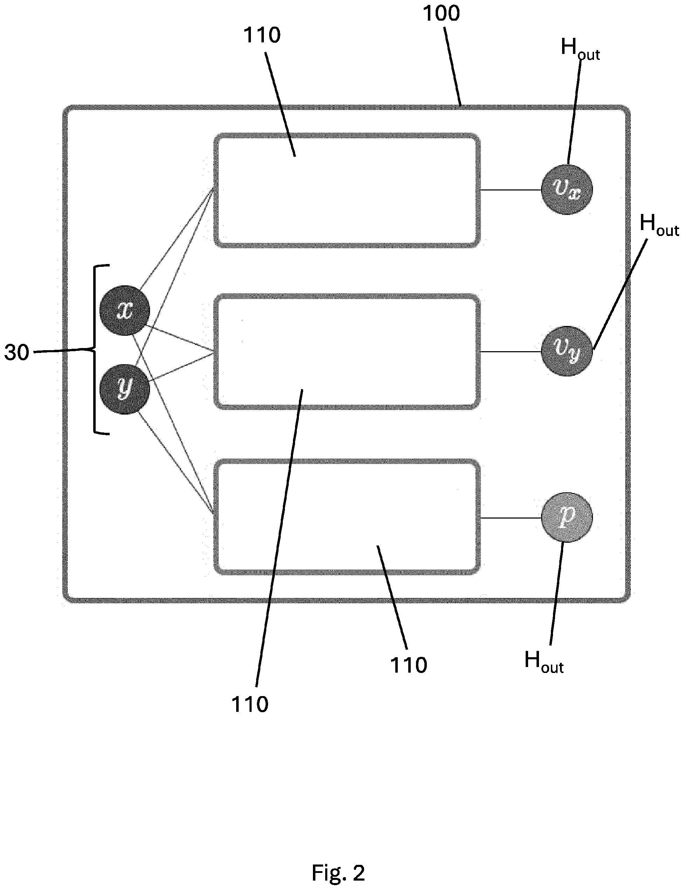

In Figure 2, an exemplary quantum physics-informed neural network 100 according to an aspect of the disclosure is shown. The quantum physics-informed neural network 100 is configured to approximate at least two unknown variables of a set of partial differential equations.

The quantum physics-informed neural network 100 comprises at least two hybrid networks 110, each corresponding to a different unknown variable to be approximated. In an example, the quantum physics-informed neural network 100 may comprise three hybrid networks 110, each approximating a different unknown variable vₓ, and p, such as e.g. given by eq. (2).

The input to the quantum physics-informed neural network 100 comprises of grid coordinates 30. The grid coordinates 30 are part of a numerical grid 20. For instance, the numerical grid 20 may comprise a first dimension, e.g. labeled x, and a second dimension, e.g. labeled y, with corresponding grid coordinates 30. These grid coordinates 30 are fed into the quantum physics-informed neural network 100, and from there to each of the hybrid networks 110. Each hybrid network 110 processes the grid coordinates 30 independently, as indicated by the separate lines connecting the grid coordinates 30 to each hybrid network 110. In particular, the hybrid networks 110 are not interconnected, thereby achieving the technical effects and advantages as e.g. described above.

Each hybrid network 110 generates an output Hₒᵤₜ, which corresponds to the approximation of the respective unknown variable at the given grid coordinates 30. The outputs Hₒᵤₜ of the hybrid networks 110 may correspond to the respective output of the quantum physics-informed neural network 110. In an example (cf. e.g. eq. (2)), a first hybrid network 110 outputs Hₒᵤₜ for the unknown variable vₓ, a second hybrid network 110 outputs Hₒᵤₜ for the unknown variable v_{y}, and a third hybrid network 110 outputs Hₒᵤₜ for the unknown variable p.

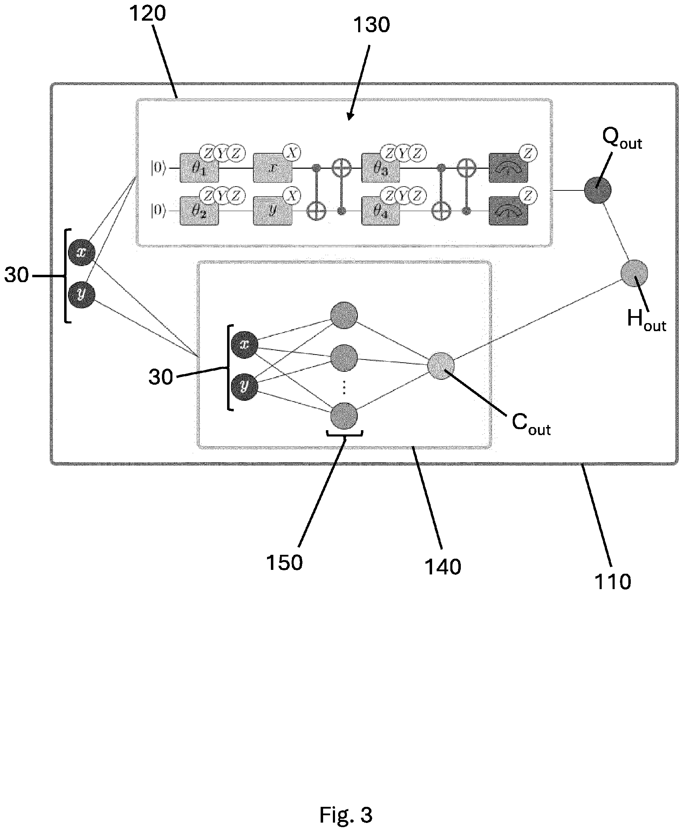

Figure 3 shows an exemplary embodiment of a hybrid network 110 of a quantum physics-informed neural network 100 according to an aspect of the disclosure.

The hybrid network 110 includes a quantum network 120 and a classical network 140, which are not interconnected. The quantum network 120 contains at least one quantum layer 130, and the classical network 140 contains at least one classical layer 150.

It may be provided that the classical network 140 may be or may comprise a multilayer perceptron. In some embodiments, the classical network 140 may have ten neurons in one hidden layer, although fewer or more layers may be employed in other embodiments. At least one, multiple or all activation functions may be or may comprise ReLU activation functions. Alternatively or additionally, at least one, multiple or all activation functions may be or may comprise SiLU activation functions.

The input to the system is provided by grid coordinates 30, which represent the numerical grid at which the unknown variables are to be approximated. These grid coordinates 30 may be input into both the quantum network 120 and the classical network 140 of each hybrid network 110.

The quantum network 120 may comprise one or more quantum layers 130. In some embodiments, the quantum network 120 may be or may comprise exactly one quantum layer 120. In some embodiments, the quantum network 120 may comprise more than one quantum layer 120. The quantum layer 130, and/or the quantum network 120, comprises at least one or multiple parameters, which may be adjusted and/or trained during or when training the quantum network 120, the hybrid network 110 and/or the quantum physics-informed neural network 100. The quantum network 120 may process the input grid coordinates 30 through a series of quantum gates and parameterized rotations, resulting in the quantum output Qₒᵤₜ. The processing of the input, and/or the output of the quantum network 120, may depend on the parameters.

The classical network 120 may be or may comprise a neural network. The classical network 120 may comprise one or more classical layers 150. The classical layers 150 may be hidden layers. Each layer may have an activation function.

The classical network 140 may process the input grid coordinates 30 through its classical layer 150. The classical network 140 may be or may comprise a multilayer perceptron, which consists of multiple interconnected neurons. The output of the classical network 140 is denoted as Cout.

The outputs Qₒᵤₜ from the quantum network 120 and Cout from the classical network 140 are then combined to produce the final output Hₒᵤₜ of the hybrid network 110. This combination may be achieved through a weighted sum, where the weights are applied to the individual outputs and their interaction term.

A quantum physics-informed neural network 100 having hybrid networks 110 as shown in fig. 3 and trained for solving the Kovasznay equations (2), i.e. having outputs vₓ, and p, has been compared with a corresponding "non-quantum" physics-informed neural network.

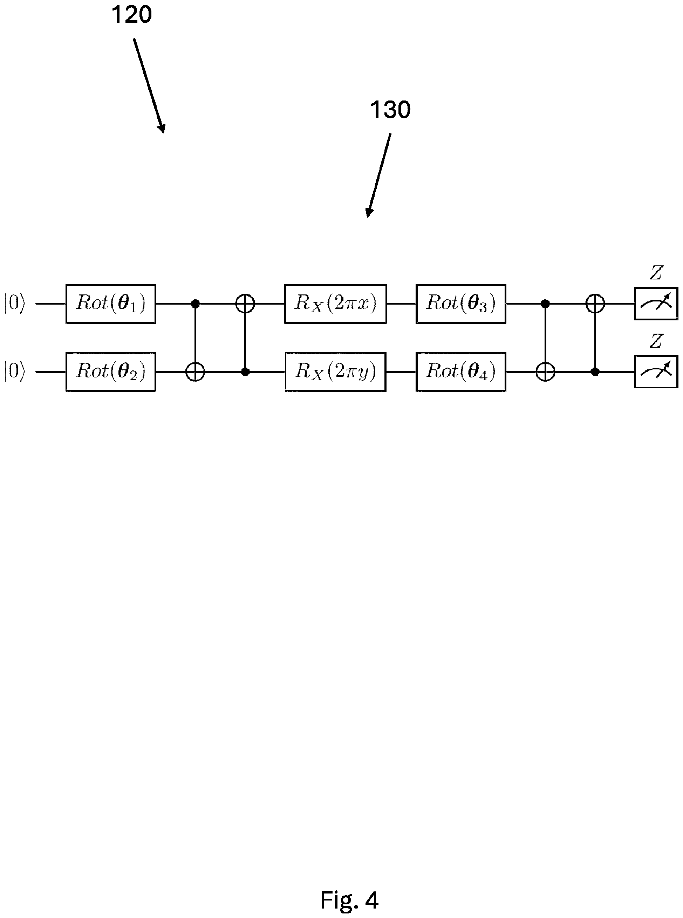

The comparative "non-quantum" physics-informed neural network has the same architecture as the quantum physics-informed neural network 100 as shown in fig. 2, and differs only in that the hybrid network comprises another classical network instead of the quantum network 120. In other words, in the hybrid networks of the "non-quantum" (classical) physics-informed neural network, the output of a classical network 140 (corresponding to the classical network 140 of the quantum physics-informed neural network 100) is combined with the output of the other classical network by weighted sums to form the output of a hybrid network of the "non-quantum" physics-informed neural network. In this example, the hybrid networks 110 of the quantum physics-informed neural network 100 comprise each a classical network 140 having ten neurons in one hidden layer. Further, each hybrid network 110 of the quantum physics-informed neural network 100 comprises a quantum network 120 having a parameterized quantum two-qubit circuit 130 (as shown in fig. 4). For the comparative "non-quantum" physics-informed neural network, each hybrid network comprises a classical network 140 having ten neurons in one hidden layer (equivalent to the classical network 140 of the quantum physics-informed neural network 100) and another classical network having twelve hidden layers replacing the quantum network 120.

In this example, the total number of parameters of the quantum physics-informed neural network 100 was 936, and the total number of parameters of the "non-quantum" physics-informed neural network was 1239.

Both the quantum physics-informed neural network 100 and the comparative "non-quantum" physics-informed neural network have been trained using the same loss function, comprising the Kovasznay equations (2). Here, the Reynolds number was chosen to Re = 20, corresponding to a (non-dimensional) kinematic viscosity v = 1/Re = 0.05. The loss function comprises a partial differential equation loss function L_{PDE} as derived from the Kovasznay equations (2) as well as a boundary condition loss function. Dirichlet boundary conditions were chosen.

Since the Kovasznay equations (2) are equations for a flow behind a grid, there is periodicity assumed in one spatioal direction, in particular perpendicular to the main flow direction. Futher, downstream, cf. Laminar flow behind a two-dimensional grid, L. Kovasznay, Mathematical Proceedings of the Cambridge Philosophical Society, 1948.

While the pressure p was approximated quite good by the quantum physics-informed neural network 100 and sufficiently well by the comparative "non-quantum" physics-informed neural network, the quantum physics-informed neural network 100 significantly better approximated the velocity components vₓ, than the comparative "non-quantum" physics-informed neural network.

In particular, the quantum physics-informed neural network 100 was able to replicate the character of the exact solution with good accuracy, without any information about the exact solution, only the equations (2) and boundary conditions. On the other hand, the comparative "non-quantum" physics-informed neural network, even superior to the quantum model in the number of parameters, did not succeed under similar conditions. In particular, the periodic character of velocity projections vₓ, was beyond the expressive capabilities of the "non-quantum" physics-informed neural network, while being captured by the quantum physics-informed neural network 100.

Thus, even though the network architecture of the quantum physics-informed neural network 100 is somewhat simple, it was found to have a high accuracy and was able to capture the effects of periodicity quite well.

Figure 4 illustrates an exemplary quantum layer 130, which may be part of a quantum network 120. In some embodiments, the quantum layer 130 is identical with the quantum network 120, but the quantum network 120 is not necessarily limited thereto. The quantum layer 130, and/or the quantum network 120, may be configured to process quantum information using a series of quantum gates applied to qubits, which may be initialized in the state |0〉.

The quantum layer 130 may be or may comprise a parameterized quantum two-qubit circuit. Such a quantum circuit may be relatively simple, but demonstrate a high efficiency.

The quantum layer 130 may begin with two qubits, each initialized to the state |0〉 (to the left of figure 4). A first operation may be applied to each qubit, where the first operation may be or may comprise a rotation gate, as e.g. denoted in fig. 4 by Rotθ₁ and Rotθ₂ for the first and second qubits, respectively. These rotation gates are parameterized by angles θ₁ and θ₂, which are adjustable parameters within the quantum network 120, allowing for the tuning of the quantum state.

Following the initial rotations, the quantum layer 130 comprises controlled-NOT (CNOT) gates, which are represented by the symbols connecting the qubits, i.e. by the dot **•,** the vertical line and the ⊗ symbol. These gates introduce entanglement between the qubits.

Subsequently, the quantum layer 130 comprises RX rotation gates, denoted as RX2πx and RX2πy, to each qubit. These gates perform rotations around the X-axis of the Bloch sphere, parameterized by the variables 2πx and 2πy.

The quantum layer 130 then comprises another set of rotation gates, Rotθ₃ and Rotθ₄, to the first and second qubits, respectively. These rotation gates further adjust the quantum states, providing additional degrees of freedom for the quantum network 120 to optimize its function. The rotation gates are parameterized by angles θ1 and 02, which are adjustable parameters within the quantum network 120, allowing for the tuning of the quantum state.

Following the rotation gates Rotθ3 and Rotθ4, the quantum layer 130 comprises further controlled-NOT (CNOT) gates, which are again represented by the symbols connecting the qubits, i.e. by the dot **•,** the vertical line and the ⊗ symbol.

Finally, the quantum layer 130 concludes with measurement operations in the Z-basis, as indicated by the boxes with Z having measurement symbols (on the right of fig. 4). That is, the qubits are measured by the σ_{z}. operator. These operations collapse the quantum states into classical information, which can be used as output from the quantum layer 130. The measurements provide the final quantum output, which may be combined with outputs from classical networks to form the output of the hybrid network.

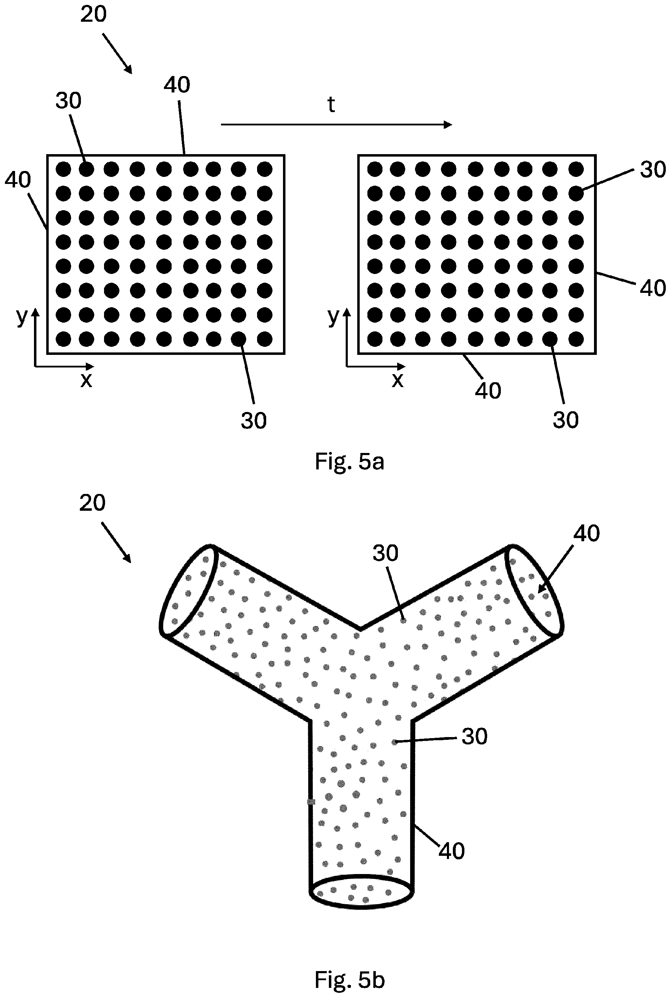

Figure 5a and Figure 5b illustrate exemplary embodiments of a numerical grids 20 used for approximating unknown variables in a computational domain.

In Fig. 5a, the numerical grid 20 comprises two spatial directions x and y, which are perpendicular to each other. In particular, x and y may correspond to cartesian coordinates. The grid coordinates 30 are depicted as discrete points arranged in a regular pattern along the x and y axes. The numerical grid 20 of fig. 5a further comprises time as a coordinate, as indicated by the arrow t. That is, in this particular embodiment, each grid point 30 input into the quantum physics-driven neural network 100 may be associated with a tuple (x, y, t). The boundary conditions 40 are indicated at the edges of the grid, which define the constraints or limits for the computational domain. The boundary conditions may be periodic in at least one, several or all directions.

Figure 5b presents a different exemplary embodiment of a numerical grid 20. Here, the numerical grid 20 comprises a three-dimensional Y-shaped configuration. The grid coordinates 30 are distributed throughout the volume of the Y-shaped domain, in a more complex spatial arrangement compared to the two-dimensional grid in Figure 5a. The grid points 30 may be non-uniformly distributed in space. The numerical grid may be non-regular and/or non-homogeneous. The boundary conditions 40 are depicted at the surfaces of the Y-shaped structure, outlining the limits of the computational domain. For instance, the numerical grid 20 may comprise to a Y-shaped mixer for mixing, e.g. for mixing fluids.

The choice of grid configuration, whether two-dimensional or three-dimensional, may depend on the specific requirements of the problem being addressed. The numerical grid 20 may serve as the foundation for inputting data into the quantum physics-informed neural network 100, enabling the approximation of unknown variables at each grid coordinate. Alternatively or additionally, the numerical grid 20 and/or the grid points 30 may serve as those coordinates in time and/or space at which the loss function to be minimized is evaluated.

The numerical grids 20 of figs. 5a and 5b are only examples numerical grids 20 accommodating different spatial and temporal configurations, facilitating the accurate modeling of complex systems. The grid coordinates 30 and boundary conditions 40 ensure the computational model adheres to the physical constraints and geometrical characteristics of the problem domain.

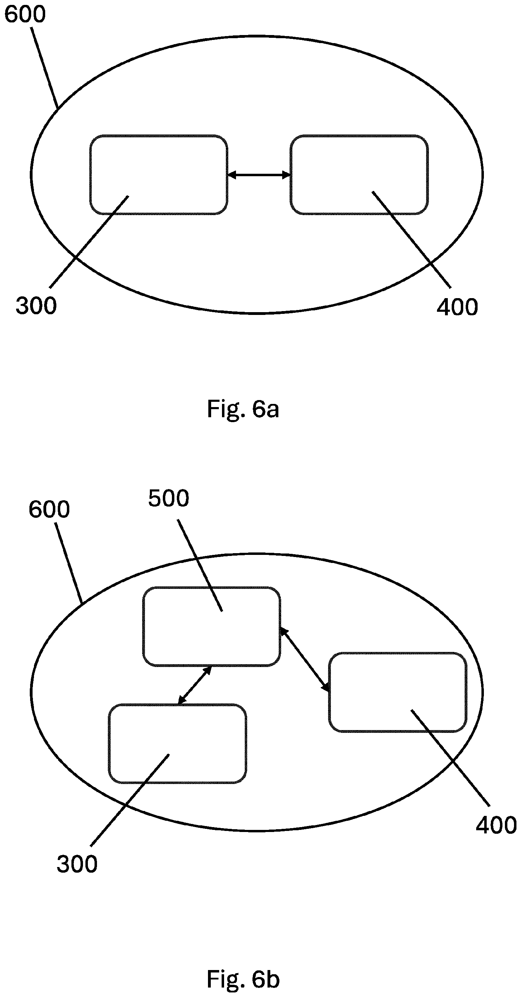

Figure 6a illustrates an exemplary hybrid computing system 600 according to an aspect of the disclosure. The hybrid computing system 600 comprises a classical computing unit 300 and a quantum computing unit 400. The classical computing unit 300 and the quantum computing unit 400 are connected to each other such that data may be transmitted between them. This configuration enables the hybrid computing system 600 to leverage both classical and quantum computing capabilities for processing tasks.

Figure 6b depicts an alternative exemplary embodiment of a hybrid computing system 600, which includes a classical computing unit 300, a quantum computing unit 400 and an output unit 500. In this embodiment, the classical computing unit 300 and the output unit 500 may be configured such that data may be transmitted between the two. Further, the quantum computing unit 400 and the output unit 500 may be configured such that data may be transmitted between the two. The classical computing unit 300 and the quantum computing unit 400 can transmit their respective outputs to the output unit 500. The output unit 500 is configured to combine the outputs received from the classical computing unit 300 and the quantum computing unit 400 to produce the final output of the hybrid network.

In both figures, the hybrid computing system 600 is designed to facilitate the integration and cooperation of classical and quantum computing resources. The classical computing unit 300 is responsible for performing computations using classical algorithms, while the quantum computing unit 400 executes quantum algorithms. The interconnection between these units ensures that data can be exchanged and combined effectively, optimizing the overall computational performance of the system.

The inclusion of the output unit 500 in Figure 6b highlights an enhanced configuration where the final output is generated by combining the results from both the classical and quantum computations. This setup is particularly advantageous for applications requiring the strengths of both computing paradigms, such as solving complex partial differential equations or other computationally intensive tasks.

It may be provided that one or more features as disclosed in one or more of the claims, the figures and/or the description, may be relevant for the realization of the invention.

### List of reference numerals:

- 20: numerical grid
- 30: grid coordinate
- 40: boundary

- 100: quantum physics-informed neural network
- 110: hybrid network
- 120: quantum network
- 130: quantum layer
- 140: classical network
- 150: classical layer

- 300: classical computing unit
- 400: quantum computing unit
- 500: output unit
- 600: hybrid computing system

- Hₒᵤₜ: output of a hybrid network
- Qₒᵤₜ: output of a quantum network
- Cₒᵤₜ: output of a classical network

## Claims

1. A computer-implemented method for approximating at least two unknown variables of a set of partial differential equations using a quantum physics-informed neural network (100), the method comprising the steps:
providing a numerical grid (20) having grid coordinates (30) at which the unknown variables are to be approximated;
providing a quantum physics-informed neural network (100), the quantum physics-informed neural network (100) comprising a hybrid network (110) for each unknown variable, wherein the hybrid networks (110) are not interconnected to each other, each hybrid network (110) having a quantum network (120) having at least one quantum layer (130) and a classical network (140) having at least one classical layer (150), wherein the respective quantum network (120) and the respective classical network (140) are not interconnected;
inputting the grid coordinates (30) into the quantum physics-informed neural network (100), such that the grid coordinates (30) are input to each hybrid network (110); and
computing the output (Hₒᵤₜ) of each hybrid network (110) for each grid coordinate (30), each output (Hₒᵤₜ) corresponding to a different unknown variable to be approximated at the grid coordinate (30), wherein the output (Hₒᵤₜ) of each hybrid network (110) is obtained by combining an output of the respective quantum network (Qₒᵤₜ) and an output of the respective classical network (Cₒᵤₜ) of said hybrid network (110).

2. The computer-implemented method of claim 1, further comprising:
before providing the quantum physics-informed neural network (100), training the quantum physics-informed neural network (100), wherein the training comprises a loss function (160) formed from the partial differential equations to be solved and from boundary conditions.

3. The computer-implemented method of claim 2, wherein the boundary conditions comprise at least one periodic boundary condition.

4. The computer-implemented method of any of the preceding claims, wherein combining the output of the quantum network (Qₒᵤₜ) and the output of the classical network (Cₒᵤₜ) to obtain the output of a respective hybrid network (Hₒᵤₜ) comprises a weighted sum ${H}_{out} = {w}_{0} + {w}_{1} ∗ {Q}_{out} + {w}_{2} {C}_{out} + {w}_{3} {Q}_{out} {C}_{out}$ where w₀, w₁, w₂ and w₃ are weights.

5. The computer-implemented method of any of the preceding claims, wherein inputting the grid coordinates (30) comprises inputting the same grid coordinates (30) into each classical network (140) and each quantum network (120).

6. The computer-implemented method of any of the preceding claims, wherein the output (Cₒᵤₜ)of each classical network (140) is computed by a classical computing unit (300), and the output (Qₒᵤₜ) of each quantum network (120) is computed by a quantum computing unit (400).

7. The computer-implemented method of claim 6,
wherein the output of the quantum network (Qₒᵤₜ) is transmitted from the quantum computing unit (400) to the classical computing unit (300), and the classical computing unit (300) combines the output (Qₒᵤₜ) received from the quantum computing unit (400) with the output (Cₒᵤₜ) computed by said classical computing unit (140) to the output of the hybrid network (Hₒᵤₜ); and/or
wherein the output of the quantum network (Qₒᵤₜ) is transmitted from the quantum computing unit (400) to an output unit (500) and the output of the classical network (Cₒᵤₜ) is transmitted from the classical computing unit (300) to the output unit (500), wherein the output unit (500) combines the output (Cₒᵤₜ) received from the classical computing unit (300) and the output (Qₒᵤₜ) received from the quantum computing unit (400) to the output of the hybrid network (Hₒᵤₜ).

8. The computer-implemented method of any of the preceding claims, wherein each quantum layer (130) is or comprises a parameterized quantum two-qubit layer.

9. The computer-implemented method of any of the preceding claims, wherein each classical network (140) is or comprises a multilayer perceptron.

10. The computer-implemented method any of the preceding claims, wherein at least one activation function of each hybrid network (110) is a Sigmoid Linear Unit activation function.

11. A hybrid computing system (600) being configured to carry out the method of any of the preceding claims 1 to 10.

12. The hybrid computing system (600) of claim 11, wherein the hybrid computing system (600) comprises a classical computing unit (300) which is configured to compute the output of at least one or all classical networks (Cₒᵤₜ), and wherein the hybrid computing system (600) further comprises a quantum computing unit (400) which is configured to compute the output of at least one or all quantum networks (Qₒᵤₜ).

13. The hybrid computing system (600) of claim 12,
wherein the quantum computing unit (400) and the classical computing unit (300) are connected such that data may be transmitted between them, wherein the quantum computing unit (400) is configured to transmit the output of the quantum network (Qₒᵤₜ) to the classical computing unit (300) and wherein the classical computing unit (300) is configured to combine output (Qₒᵤₜ) received from the quantum computing unit (400) with output (Cₒᵤₜ) computed by the classical computing unit (300) to an output of the hybrid network (Hₒᵤₜ); and/or
wherein the hybrid computing system (600) comprises an output unit (500) which is connected to the classical computing unit (300) and the quantum computing unit (400) such that data may be transmitted between the output unit (500) and the classical computing unit (300) and between the output unit (500) and the quantum computing unit (400), wherein the classical computing unit (300) is configured to transmit output (Cₒᵤₜ) to the output unit (500) and wherein the quantum computing unit (400) is configured to transmit output (Qₒᵤₜ) to the output unit (500), wherein the output unit (500) is configured to combine the respective outputs (Cₒᵤₜ, Qₒᵤₜ) to an output of the hybrid network (Hₒᵤₜ).

14. A computer program product comprising instructions which, when the program is executed by the hybrid computing system (600) of any of claims 11 to 13, to cause the hybrid computing system (600) to carry out the method of any of claims 1 to 10.

15. A computer-readable medium comprising instructions which, when executed on the hybrid computing system (600) of any of claims 10 to 13, cause the hybrid computing system (600) to carry out the method of any of claims 1 to 10.
